# EUROPEAN PATENT SPECIFICATION

(11) **EP 1 864 869 B1**
(45) Date of publication and mention of the grant of the patent: **05.01.2011**
(21) Application number: 07110952.4
(22) Date of filing: 24.11.2005
(51) Int. Cl.: B60R 21/16

(54) **Airbag and airbag system**
Airbag und Airbagsystem
Airbag et système d'airbag

(30) Priority: 15.12.2004 JP 2004363107
(43) Date of publication of application: 12.12.2007
(62) Divisional of application: 05025627.0
(73) Proprietor: TAKATA CORPORATION, Minato-ku, Tokyo 106-8510 (JP)
(72) Inventor: Abe, Kazuhiro c/o Takata Corporation, Tokyo 106-8510 (JP); Senoh, Rika c/o Takata Corporation, Tokyo 106-8510 (JP); Nakajima, Akira c/o Takata Corporation, Tokyo 106-8510 (JP)
(74) Representative: Banzer, Hans-Jörg

(56) References cited:
- DE-U1- 20 317 614
- US-A- 4 449 728
- US-A- 5 044 663
- US-A- 5 253 892
- US-A1- 2001 035 632
- US-A1- 2003 006 596
- US-B1- 6 254 121
- HONGLU ZHANG, M. GOPAL, R. SAXENA, X. AVULA: "An integrated optimization model for Airbag design and modeling by Finite Element analysis" SAE TECHNICAL PAPER SERIES, no. 2003-01-0506, 6 March 2003 (2003-03-06), XP002456332 Detroit, Michigan, US

## Description

The present invention relates to an airbag mounted in a high-speed mobile unit such as a vehicle for protecting a human body by inflating in an emergency such as a collision.

Various airbag systems such as a driver-seat airbag system are used to protect occupants in an emergency such as a car collision. The driver-seat airbag system includes an airbag which is formed by stitching up the peripheries of an occupant-side front panel and a rear panel opposite thereto. The rear panel has an inflator opening for receiving the distal end of an inflator in the center. The periphery of the opening is fixed to a retainer with pins or rivets. The rear panel also has a vent hole for absorbing the impact of a driver who strikes against the airbag by releasing air in the airbag.

It is described in Japanese Unexamined Patent Application Publication No. 7-232607 and No. 9-315246 to provide an airbag that has a partition cloth between the inflator opening in a rear panel and a front panel to partition the interior of the airbag into a central first chamber and a second chamber around it. Since the front panel is drawn by the cloth, the periphery of the inflated airbag adjacent to the occupant becomes flush with the center or projects to the occupant.

US 5 253 892 A discloses an airbag according to the preamble of claim 1.

Accordingly, it is an object of the present invention to reliably receive an occupant by an airbag whose periphery adjacent to the occupant becomes flush with the center or projects to the occupant.

According to the present invention, an airbag as defined in independent claim 1 is provided. The dependent claims define preferred and advantageous embodiments of the invention.

An airbag according to the present invention is an airbag inflating with gas from a gas generator. The airbag is characterized by including a front panel disposed at a position adjacent to an occupant and a rear panel disposed at a position opposite to the occupant, the rims of the front panel and the rear panel being joined together; and a joint member that joins a center portion, which is preferably the center of the front panel, of the front panel or a middle portion between the center portion and the rim to the rear panel (preferably, the middle portion corresponds to the middle between the center of the front panel and the rims). With the airbag in a fully inflated condition, the periphery of the airbag adjacent to the occupant becomes flush with the center or projects to the occupant more than the center, wherein the periphery projects to the occupant more than the center for a time of 10 to 60 msec after the airbag starts to inflate.

With the airbag in a fully inflated condition, the periphery may preferably project to the occupant by 10 to 100 mm more than the center.

The joint member may be one or more inner panels or a tether belt, for example. When using an inner panel, the arrangement of the at least one inner panel is preferably such that it divides the interior of the airbag up into a first chamber and a second chamber, both chambers preferably being in communication via one or more communication openings.

An airbag system according to the invention is characterized in an airbag system including an airbag and a gas generator having gas ports, and the airbag is the airbag according to the invention.

In the airbag and the airbag system according to the invention, the periphery projects to the occupant more than the center for a time of 10 to 60 msec after the airbag starts to inflate. The human breast is generally stronger at the ribs than at the breastbone. Accordingly, when the side of an inflating airbag adjacent to an occupant strikes against the occupant, an occupant-side periphery is projected to the occupant more than the center so that the periphery comes into contact with the occupant earlier than the center. Thus the strong ribs can be received by the airbag, allowing the impact on the occupant to be absorbed.

Since the periphery of the airbag is projected to the occupant by about 10 to 100 mm more than the center, the occupant can be sufficiently received at the ribs, allowing absorption of the impact.

Embodiments of the present invention will be described hereinafter with reference to the drawings.
Fig. 1 is a cross-sectional view of an airbag and an airbag system according to an embodiment of the present invention.
Fig. 2 is an exploded perspective view of the airbag and the airbag system in Fig. 1.
Fig. 3 is a sectional view of an airbag and an airbag system according to another embodiment.
Fig. 4 is a perspective view of an inner panel of Fig. 3.

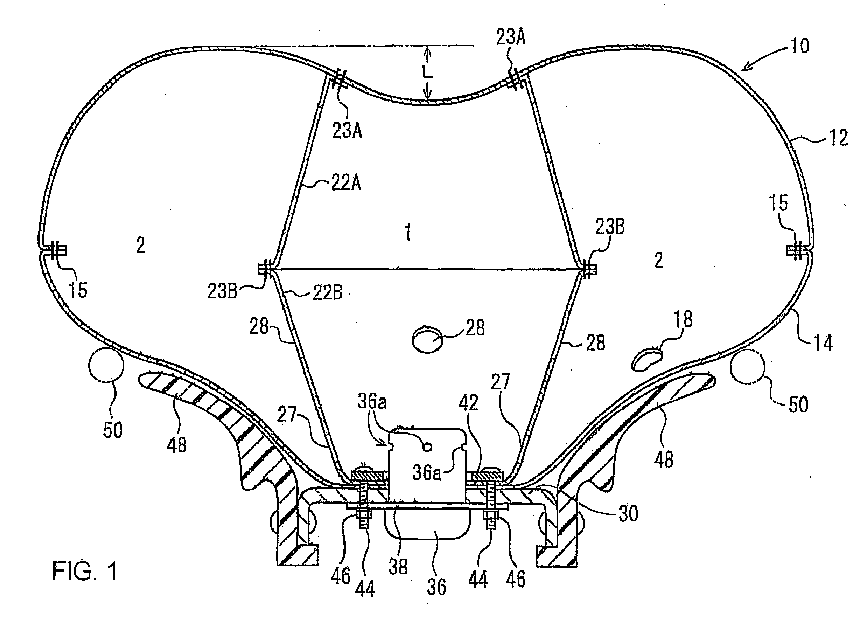

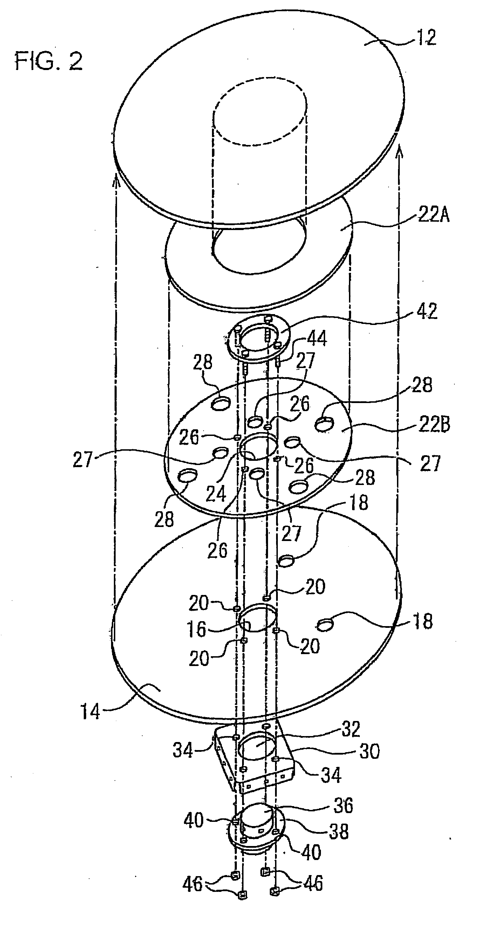

Fig. 1 is a cross-sectional view of a car driver-seat airbag and an airbag system according to an embodiment of the present invention. Fig. 2 is an exploded perspective view of the airbag and the airbag system.

The airbag 10 includes a front panel 12, a rear panel 14, a first inner panel 22A, and a second inner panel 22B, which are each made of a circular cloth. The front panel 12 and the rear panel 14 have an equal diameter, whose outer rims are stitched together with a seam 15 of thread or the like into a bag shape. The stitched portion has a ring-shape extending around the outer peripheries of the front panel 12 and the rear panel 14.

The rear panel 14 has an inflator (gas generator) opening 16 and vent holes 18. The inflator opening 16 is disposed in the center of the rear panel 14. Around the inflator opening 16 is provided bolt insertion holes 20.

The first inner panel 22A and the second inner panel 22B are provided in the airbag 10. The first and second inner panels 22A and 22B are substantially concentric with the front panel 12 and the rear panel 14, whose outer rims are stitched together with a seam 23B of thread or the like. The inner rim of the first inner panel 22A adjacent to the front panel 12 (the rim at the distal end of the inner panel 22A with the airbag 10 in an inflated state) is joined to the middle between the center and the rim of the front panel 12 by stitching with a seam 23A of thread or the like.

An inflator opening 24, which is substantially concentric with the inflator opening 16 in the rear panel 14, is disposed in the center of the second inner panel 22B adjacent to the rear panel 14 (at the rear end of the second inner panel 22B with the airbag 10 in an inflated state). The openings 16 and 24 have a substantially equal diameter. Around the opening 24 in the inner panel 22B are provided bolt insertion holes 26 which agree with the bolt insertion holes 20 in the rear panel 14.

The second inner panel 22B also has inner vent holes 28 relatively close to the outer rim and communication openings 27 closer to the inner rim than inner vent holes 28. The inner vent holes 28 may be provided in the first inner panel 22A.

The rim of the inflator opening 24 in the second inner panel 22B is placed on the rim of the inflator opening 16 in the rear panel 14 and then placed on the rim of an inflator mounting hole 32 in a retainer 30. Then the rims of the inflator openings 24 and 16 are fixed to the retainer 30 via the bolt insertion holes 26 and 20. Thus the rim of the inflator opening 24 in the second inner panel 22B are connected to the rim of the inflator opening 16 in the rear panel 14, the outer rims of the first inner panel 22A and the second inner panel 22B are connected with each other, and the inner rim of the first inner panel 22A is connected with the front panel 12.

The first and second inner panels 22A and 22B serve as joint members to join the center of the front panel 12 of the airbag 10 to the rear panel 14.

Accordingly, when the airbag 10 inflates, the center of the front panel 12 (the portion surrounded by the seam 23A) is drawn to the retainer 30 by the first and second inner panels 22A and 22B, so that the periphery thereof becomes flush with the center or projects to the occupant more than the center. The invention is constructed such that the periphery always projects to the occupant more than the center for a time of 10 to 60 msec after the airbag 10 starts to inflate.

In the invention, it is preferable that, with the airbag 10 in a fully inflated condition, the periphery of the front panel 12 projects to the occupant more than the center, wherein the length L of the projection to the occupant from the center to the periphery (Fig. 1) be from 10 to 100 mm, more preferably, from 10 to 50 mm.

The width of the breast of men and women of 18 years old or more having average physique, who are driver-seat occupants, is generally from about 230 to 300 mm. Accordingly, the diameter (or at least the width) of the airbag 10 in a fully inflated condition is preferably greater than 300 mm long. Also, it preferably has an allowance of about 100 mm on the right and the left in consideration of the possibility that the occupant may fall down to the right or left off the center of the airbag 10. Therefore, according to the invention, the diameter (or at least the width) of the airbag 10 in a fully inflated condition is preferably 500 mm long or more.

In the invention, it is preferable that, with the airbag 10 in a fully inflated condition, the portion of the periphery of the front panel 12 which projects to the occupant is substantially circular with a radius of about 100 to 150 mm from the center of the airbag 10. With such a structure, when an occupant falls down onto the inflated airbag 10, the most projecting portion receives the vicinity of the right and left ribs of the occupant, and the center of the front panel 12 which is recessed to the retainer 30 relative to the most projecting portion faces the breastbone of the occupant.

The interior of the airbag 10 is partitioned by the first and second inner panels 22A and 22B into a first chamber 1 and a second chamber 2 surrounding the first chamber 1. The first chamber 1 is disposed inside the first and second inner panels 22A and 22B.

The communication openings 27 are disposed on the extension of the direction of the gas jet from an inflator 36, which will be described later, disposed in the first chamber 1 via the inflator openings 16 and 24, or at the positions that face gas ports 36a of the inflator 36.

In this embodiment, as shown in Fig. 2, the communication openings 27 and the inner vent holes 28 are disposed relatively at four positions at equal intervals along the circumference of the airbag 10. The communication openings 27 and the inner vent holes 28 are out of circumferential phase with each other to the center of the airbag.

The openings 16 and 24, the communication openings 27, and the vent holes 18 and 28 may have reinforcing patches or the like around them.

The retainer 30 for mounting the airbag 10 thereon has the inflator mounting hole 32 in the center and bolt insertion holes 34 around it.

The inflator 36 is substantially cylindrical and has gas ports 36a around the side circumferential surface at the distal end of the cylinder axis. In this embodiment, the gas ports 36a are disposed at four positions at equal intervals around the circumference of the inflator 36. The inflator 36 emits gas radially through the gas ports 36a. A flange 38 for fixing the inflator 36 projects from the side circumferential surface in the middle of the cylinder axis of the inflator 36 (at a position closer to the rear end than the gas ports 36a). The flange 38 has bolt-insertion holes 40. The distal end of the inflator 36 is fitted in the inflator mounting hole 32 of the retainer 30.

In mounting the airbag 10 to the retainer 30, the rims of the respective inflator openings 16 and 24 of the rear panel 14 and the second inner panel 22B are retained to the rim of the inflator mounting hole 32 of the retainer 30 with a ferrule 42. The distal end of the inflator 36 fitted in the inflator mounting hole 32 is inserted into the first chamber 1 through the inflator openings 16 and 24. The gas ports 36a disposed at the distal end of the inflator 36 face the communication openings 27 in the second inner panel 22B, respectively.

The second inner panel 22B, the airbag 10, and the inflator 36 are fixed to the retainer 30 by inserting stud bolts 44 of the ferrule 42 into the bolt insertion holes 26, 20, 34, and 40, and tightening nuts 46 to the ends thereof. The airbag 10 is folded, and a module cover 48 is mounted to the retainer 30 so as to cover the folded airbag 10. Thus the airbag system is constructed. The airbag system is mounted to the steering wheel of a car (only a rim 50 is shown in Fig. 1).

In the event of a vehicle collision, the inflator 36 is activated to emit a jet of gas into the airbag 10. The airbag 10 is inflated by the gas to push the module cover 48 open and deploy in the cabin, thereby protecting a driver-seat occupant.

In the airbag 10, the communication openings 27 which communicate the first chamber 1 and the second chamber 2 with each other are disposed on the extension of the direction of the gas jet from the inflator 36 disposed in the first chamber 1, or so as to face the gas ports 36a of the inflator 36. Accordingly, upon activation of the inflator 36, the gas is emitted to the communication openings 27 from the gas ports. Therefore the gas from the inflator 36 is supplied directly also into the second chamber 2 through the communication openings 27, as shown in Fig. 1. Thus the second chamber 2 inflates early.

In the airbag 10, the periphery of the front panel 12 projects to the occupant more than the center for a time from 10 to 60 msec after starting inflation. Accordingly, when an occupant falls onto the inflating airbag 10, the periphery of the front panel 12 comes into contact with the ribs earlier than with the center of the occupant. Thus the airbag 10 can receive the ribs stronger than the breastbone to absorb the impact on the occupant.

In the airbag 10 according to the embodiment, the periphery of the front panel 12 projects to the occupant by about 10 to 100 mm more than the center. Accordingly, it can sufficiently receive the occupant at the ribs to absorb the impact without applying excess reaction to the vicinity of the breastbone of the occupant.

According to the embodiment, when an occupant strikes against the inflated airbag 10, the gas in the first chamber 1 and the second chamber 2 flows out through the inner vent holes 28 or the vent holes 18, allowing the impact to be absorbed sufficiently.

The foregoing embodiment is an example of the invention, and the invention is not limited to that. For example, while the embodiment has the structure that four gas ports 36a and four communication openings 27 are provided, they are not limited to four. Also, according to the embodiment, the communication openings 27 are disposed on the extension of the gas jet from all the gas ports 36a of the inflator 36. Alternatively, the communication openings 27 may be disposed only on the extension of the gas jet from part of the gas ports 36a. Part of the communication openings 27 may be disposed off the extension of the gas ports 36a, so that there may be communication openings not facing the gas ports 36a.

The shape of the communication openings 27 may be other than that shown in the drawings. The area of the communication openings 27 is selected according to the internal volume, or the like, of the second chamber 2, thus having no particular limitation.

According to the invention, the first chamber 1 may have a rectifier cloth therein which guides the gas from the inflator into the communication openings 27.

According to the embodiment, although the inner vent holes 28 are disposed in the second inner panel 22B, the inner vent holes 28 may be disposed in the first inner panel 22A. The inner vent holes 28 may be disposed in both of the first inner panel 22A and the second inner panel 22B.

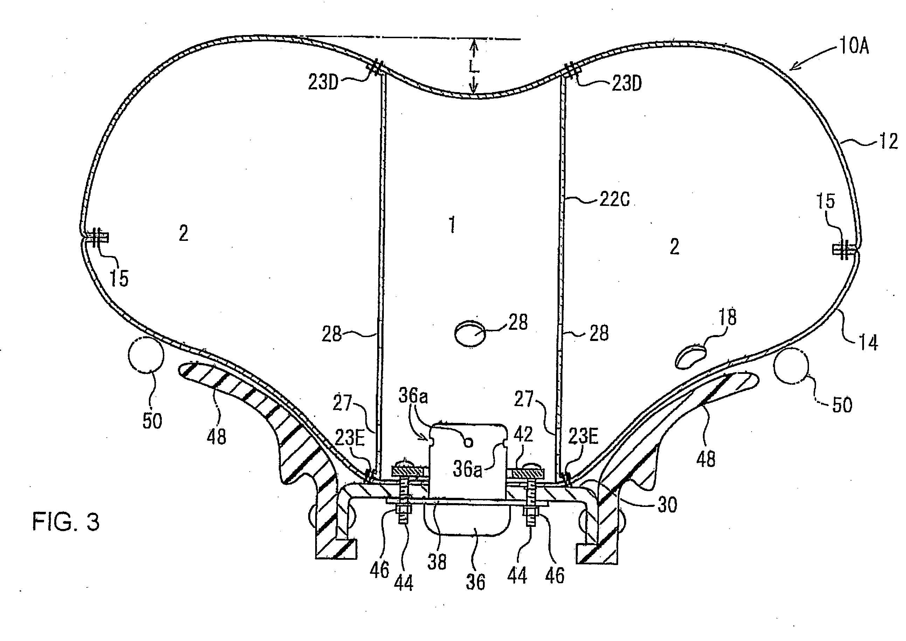

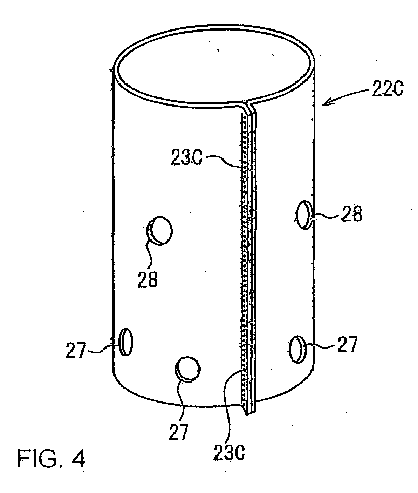

Fig. 3 is s longitudinal sectional view of another structure of the inner panel that connects the front panel and the rear panel of the airbag together. Fig. 4 is a perspective view of the inner panel.

With the airbag 10A according to the embodiment, the center of the front panel 12 is joined to the rear panel 14 by a cylindrical inner panel 22C. As shown in Fig. 4, the inner panel 22C is formed such that a substantially rectangular panel (base fabric) is rolled into a cylinder, whose facing sides are placed one on the other and stitched together by a seam 23C made of thread or the like.

The inner panel 22C is constructed such that the rim of a first end (the distal end) along the cylinder axis is disposed concentrically with the front panel 12 and stitched to the vicinity of the middle between the center and the periphery of the front panel 12 by a seam 23D. The rim of a second end (the base end) of the inner panel 22C along the cylinder axis is disposed concentrically with the inflator opening (its reference numeral is omitted in Fig. 3, refer to Fig. 2) in the center of the rear panel 14 and stitched to the periphery of the opening by a seam 23E. The interior of the airbag 10A is partitioned by the inner panel 22C into a central first chamber 1 and a second chamber 2 surrounding the first chamber 1.

At the base end of the inner panel 22C is provided communication holes 27 for communicating the first chamber 1 and the second chamber 2 with each other. Also in this embodiment, the communication openings 27 are provided on the extension of the direction of the gas jet from the inflator 36 which is disposed in the first chamber 1 via the inflator opening, or the positions facing the gas ports 36a of the inflator 36. In the middle of the inner panel 22C along the cylinder axis, the inner vent holes 28 are provided out of phase with the communication openings 27.

In mounting the airbag 10A to the retainer 30, the rim of the inflator opening of the rear panel 14 is retained to the rim of the inflator mounting hole (its reference numeral is omitted in Fig. 3, refer to Fig. 2) of the retainer 30 with the ferrule 42. The distal end of the inflator 36 fitted in the inflator mounting hole is inserted into the first chamber 1 to make the gas ports 36a at the distal end of the inflator 36 face the communication openings 27. At that time, the stud bolts 44 of the ferrule 42 are passed through the rear panel 14, the retainer 30, and the flange 38 of the inflator 36, to the ends of which nuts 46 are tightened.

Also in this embodiment, when the airbag 10A inflates, the center of the front panel 12 (the portion surrounded by the seam 23D) is drawn to the retainer 30 by the inner panel 22C, so that the periphery thereof becomes flush with the center or projects to the occupant more than the center. The airbag 10A is also constructed such that the periphery always projects to the occupant more than the center for a time of 10 to 60 msec after the airbag 10A starts to inflate.

Also in this embodiment, with the airbag 10A in a fully inflated condition, the periphery of the front panel 12 projects to the occupant more than the center, and the length L of the projection to the occupant from the center to the periphery is from 10 to 100 mm, more preferably, from 10 to 50 mm.

The other structure of the airbag 10A is the same as that of the airbag 10 in Figs. 1 and 2. Reference numerals in Figs. 3 and 4 are the same as those in Figs. 1 and 2 and indicate the same components.

Also the airbag 10A offers the same advantages as those of the airbag 10 in Figs. 1 and 2.

In the invention, the structure of the joint member that joins the center of the front panel of the airbag to the rear panel is not particularly limited. The inner panel may have a shape other than that in the drawing. The center of the front panel may be joined to the rear panel using a tether belt in place of the inner panel. Of course, the center of the front panel may be joined to the rear panel by another structure.

Although the foregoing embodiments are applications of the invention to a driver-seat airbag and a driver-seat airbag system, it should be understood that the invention can also be applied to other various airbags and airbag systems.

## Claims

1. An airbag (10; 10A) to be inflated with gas from a gas generator (36), the airbag (10; 10A) comprising:
a front panel (12) disposed at a position adjacent to an occupant and a rear panel (14) disposed at a position opposite to the occupant, rims of the front panel (12) and the rear panel (14) being joined together; and
a joint member (22A, 22B; 22C) that joins a center portion of the front panel (12) or a middle portion between the center portion and the rim to the rear panel (14),
**characterized in that**
a portion of a periphery of the front panel (12) projects to the occupant more than the center portion for a time of 10 to 60 msec after the airbag starts to inflate; and
with the airbag (10; 10A) in a fully inflated condition, the diameter of the airbag (10; 10A) is at least 500 mm, the portion of the periphery of the front panel (12) projects to the occupant by 10 to 100 mm more than the center portion, and the portion of the periphery of the front panel (12) which projects to the occupant is substantially circular with a radius of about 100 to 150 mm from the center of the airbag (10; 10A).

2. The airbag (10; 10A) according to claim 1, wherein the joint member (22A, 22B; 22C) is at least one inner panel.

3. The airbag (10; 10A) according to claim 2, wherein the at least one inner panel (22A, 22B; 22C) is substantially concentric with the front panel (12) and the rear panel (14).

4. The airbag (10; 10A) according to claim 2 or claim 3, wherein the interior of the airbag (10; 10A) is partitioned by the at least one inner panel (22A, 22B; 22C) into a first chamber (1) and a second chamber (2) surrounding the first chamber (1) and being in communication with the first chamber (1) through at least one communication opening (27) formed in the at least one inner panel (22A, 22B; 22C).

5. The airbag (10; 10A) according to claim 4, wherein the first chamber (1) has an opening (16, 24) in which the gas generator (36) is to be disposed.

6. The airbag (10; 10A) according to any one of claims 2-5, wherein at least one vent hole (28) is formed in the at least one inner panel (22A, 22B; 22C).

7. The airbag (10; 10A) according to claim 1, wherein the joint member is a tether belt.

8. An airbag system, comprising the airbag (10; 10A) according to any one of claims 1-7 and a gas generator (36) having gas ports (36a).

## Patentansprüche

1. Airbag (10; 10A), welcher mit Gas von einem Gasgenerator (36) aufzublasen ist, wobei der Airbag (10; 10A) umfasst:
eine vordere Stoffbahn (12), welche an einer Position in der Nähe eines Insassen angeordnet ist, und eine hintere Stoffbahn (14), welche an einer Position gegenüber dem Insassen angeordnet ist, wobei Ränder der vorderen Stoffbahn (12) und der hinteren Stoffbahn (14) miteinander verbunden sind; und
ein Verbindungsteil (22A, 22B; 22C), welches mit einem zentralen Abschnitt der vorderen Stoffbahn (12) oder mit einem Mittelabschnitt zwischen dem zentralen Abschnitt und dem Rand der hinteren Stoffbahn (14) verbunden ist,
**dadurch gekennzeichnet,**
**dass** ein Abschnitt eines Randes der vorderen Stoffbahn (12) für eine Zeit von 10 bis 60 ms nachdem der Airbag beginnt, sich aufzublasen, mehr zu dem Insassen hervorragt als der zentrale Abschnitt; und
**dass**, wenn sich der Airbag (10; 10A) in einem vollständig aufgeblasenen Zustand befindet, der Durchmesser des Airbags (10; 10A) mindestens 500 mm beträgt, wobei der Abschnitt des Umfanges der vorderen Stoffbahn (12) um 10 bis 100 mm mehr zu dem Insassen hervorragt als der zentrale Abschnitt, und wobei der Abschnitt des Umfanges der vorderen Stoffbahn (12), welcher zu dem Insassen hervorragt, im Wesentlichen kreisförmig mit einem Radius von ungefähr 100 bis 150 mm von der Mitte des Airbags (10; 10A) ist.

2. Airbag (10; 10A) nach Anspruch 1, **dadurch gekennzeichnet, dass** das Verbindungsteil (22A, 22B; 22C) mindest eine innere Stoffbahn ist.

3. Airbag (10; 10A) nach Anspruch 2, **dadurch gekennzeichnet, dass** die mindestens eine innere Stoffbahn (22A, 22B; 22C) im Wesentlichen konzentrisch zu der vorderen Stoffbahn (12) und der hinteren Stoffbahn (14) ist.

4. Airbag (10; 10A) nach Anspruch 2 oder Anspruch 3, **dadurch gekennzeichnet, dass** das Innere des Airbags (10; 10A) durch die mindestens eine innere Stoffbahn (22A, 22B; 22C) in eine erste Kammer (1) und eine zweite Kammer (2), welche die erste Kammer (1) umgibt und mit der ersten Kammer (1) durch mindestens eine Kommunikationsöffnung (27), die in der mindestens einen inneren Stoffbahn (22A, 22B; 22C) ausgebildet ist, in Kommunikation steht, aufgeteilt ist.

5. Airbag (10; 10A) nach Anspruch 4, **dadurch gekennzeichnet, dass** die erste Kammer (1) eine Öffnung (16, 24) aufweist, in welcher der Gasgenerator (36) anzuordnen ist.

6. Airbag (10; 10A) nach einem der Ansprüche 2-5, **dadurch gekennzeichnet, dass** zumindest ein Entlüftungsloch (28) in der mindestens einen inneren Stoffbahn (22A, 22B; 22C) ausgebildet ist.

7. Airbag (10; 10A) nach Anspruch 1, **dadurch gekennzeichnet, dass** das Verbindungsteil ein Haltegurt ist.

8. Airbag-System, welches den Airbag (10; 10A) nach einem der Ansprüche 1-7 und einen Gasgenerator (36), welcher Gasanschlüsse (36a) aufweist, umfasst.

## Revendications

1. Coussin gonflable de sécurité (10 ; 10A) devant être gonflé avec du gaz provenant d'un générateur de gaz (36), le coussin gonflable de sécurité (10 ; 10A) comprenant :
un panneau avant (12), disposé en une position adjacente à un occupant, et un panneau arrière (14), disposé en une position face à l'occupant, des bords du panneau avant (12) et du panneau arrière (14) étant reliés ensemble ; et
un organe de jonction (22A, 22B ; 22C), reliant une partie centrale du panneau avant (12) ou une partie médiane, entre la partie centrale et le bord, au panneau arrière (14),
**caractérisé en ce que**
une partie de la périphérie du panneau avant (12) fait saillie vers l'occupant plus que le fait la partie centrale, pendant une durée de 10 à 60 msec, après que le coussin de sécurité gonflable ait commencé à se gonfler ; et
le coussin gonflable de sécurité (10 ; 10A) se trouvant à l'état complètement gonflé, le diamètre du coussin gonflable de sécurité (10 ; 10A) est d'au moins 500 mm, la partie de la périphérie du panneau avant (12) fait saillie vers l'occupant de 10 à 100 mm de plus que le fait la partie centrale, et la partie de la périphérie du panneau avant (12) faisant saillie vers l'occupant est sensiblement circulaire, avec un rayon d'à peu près 100 à 150 mm par rapport au centre du coussin gonflable de sécurité (10 ; 10A).

2. Coussin gonflable de sécurité (10 ; 10A) selon la revendication 1, dans lequel l'organe de jonction (22A, 22B ; 22C) est au moins un panneau intérieur.

3. Coussin gonflable de sécurité (10 ; 10A) selon la revendication 2, dans lequel le au moins un panneau intérieur (22A, 22B ; 22C) est sensiblement concentrique au panneau avant (12) et au panneau arrière (14).

4. Coussin gonflable de sécurité (10 ; 10A) selon la revendication 2 ou la revendication 3, dans lequel l'intérieur du coussin gonflable de sécurité (10 ; 10A) est subdivisé, par le au moins un panneau intérieur (22A, 22B ; 22C), en un première chambre (1) et une deuxième chambre (2), entourant la première chambre (1) et mise en communication avec la première chambre (1), par au moins une ouverture de communication (27) formée dans le au moins un panneau intérieur (22A, 22B ; 22C).

5. Coussin gonflable de sécurité (10 ; 10A) selon la revendication 4, dans lequel la première chambre (1) présente une ouverture (16, 24) dans laquelle le générateur de gaz (36) doit être disposé.

6. Coussin gonflable de sécurité (10 ; 10A) selon l'une quelconque des revendications 2 à 5, dans lequel au moins un trou d'évent (28) est formé dans le au moins un panneau intérieur (22A, 22B ; 22C).

7. Coussin gonflable de sécurité (10 ; 10A) selon la revendication 1, dans lequel l'organe de jonction est une courroie d'amarrage.

8. Système de coussin gonflable de sécurité, comprenant le coussin gonflable de sécurité (10 ; 10A) selon l'une quelconque des revendications 1 à 7 et un générateur de gaz (36) comprenant des orifices à gaz (36a).
